# EUROPÄISCHE PATENTSCHRIFT

(11) **EP 3 870 437 B1**
(45) Veröffentlichungstag und Bekanntmachung des Hinweises auf die Patenterteilung: **05.07.2023**
(21) Anmeldenummer: 19794143.8
(22) Anmeldetag: 24.10.2019
(51) Int. Cl.: B32B 5/20, B32B 5/24, B32B 25/04, B32B 25/16, B32B 37/00, D06N 3/00

(54) **BIOBASIERTES KUNSTLEDER**
BIOBASED ARTIFICIAL LEATHER
CUIR ARTIFICIEL D'ORIGINE BIOLOGIQUE

(30) Priorität: 25.10.2018 DE 102018126646
(43) Veröffentlichungstag der Anmeldung: 01.09.2021
(73) Patentinhaber: Studer Cables AG, 4658 Däniken (CH)
(72) Erfinder: PROBST, Michel, 4310 Rheinfelden (CH); EGGERT, Melanie, 5000 Aarau (CH); GUENTHARD, Conrad, 5102 Rupperswil (CH)
(74) Vertreter: Sonnenhauser, Thomas Martin
(86) Internationale Anmeldenummer: PCT/EP2019/078967
(87) Internationale Veröffentlichungsnummer: WO 2020/084029

(56) Entgegenhaltungen:
- WO-A1-2012/068727
- CN-A- 105 837 914

## Beschreibung

Die vorliegende Erfindung betrifft ein biobasiertes Kunstleder in der Form eines Schichtmaterials und ein Verfahren zu dessen Herstellung.

### Stand der Technik

Kunstleder ist seit vielen Jahren bekannt und bieten den Vorteil, dass die Herstellung von Produkten aus Kunstleder ohne tierische Erzeugnisse bzw. tierisches Leder auskommt. Dies ist vorteilhaft, da der Einsatz von tierischen Produkten eine Umweltbelastung mit sich bringt.

Eine Vielzahl von Kunstledern basiert auf dem Einsatz von Polyvinylchlorid (PVC), Polyurethan (PU), oder Mischungen daraus. Allerdings weisen PVC-basierte Produkte den Nachteil auf, dass bei dem Verbrennen giftiger Chlorwasserstoff (HCl) entsteht. Auch der Einsatz von Chlor-haltigen Ausgangsmaterialien wirkt sich negativ auf die Ökobilanz derartiger Produkte aus. Die Ökobilanz von bekannten Kunstledern ist aber auch generell nicht sehr gut, da als Ausgangsmaterial Erdöl-basierte Rohstoffe Verwendung finden und daher keine nachhaltige Produktion möglich ist.

Die US 2013/0022771 A1 beschreibt ein biobasiertes Copolymer auf der Basis eines Ethylenoxid- und/oder Propylenoxid-Monomers enthaltend ¹⁴C-Kohlenstoffisotop. Diese Polyether können mit weiteren Polymeren, beispielsweise Polyamiden, kombiniert werden. Zwar ist auch die Herstellung von Ethylen und Propylen als Ausgangsstoffe für die Ethylenoxid- und/oder Propylenoxid-Monomere beschrieben, jedoch ist die Verwendung von Polyethylen oder Polypropylen nicht vorgeschlagen. Die US 2013/0022771 A1 hält die darin beschriebenen Copolymere als geeignet für die Herstellung von Kunstleder. Allerdings enthält das Dokument keinerlei Ausführungsbeispiele, die die Eigenschaften der Materialien zeigen könnten. Ob die Copolymere tatsächlich geeignete Materialeigenschaften bereitstellen können, ist daher dem Fachmann nicht ersichtlich.

US 2011/0183099 A1 beschreibt biobasierte thermoplatische Elastomere, die unter anderem auch für Kunstleder geeignet sein sollen. Die thermoplatischen Elastomere basieren auf einer Kombination von einem Tetrahydrofuranmonomer und einem starren Block aus Polyamiden, Polyurethanen oder Polyester. Wie in der US 2013/0022771 A1 sind auch in der US 2011/0183099 A1 keine Ausführungsbeispiele enthalten, die die Materialeigenschaften zeigen. EP2342262 (B1) offenbart Polyamid- und Polytetramethylenglycol-Blockcopolymere. WO 2012/068727 A1 offenbart Zusammensetzungen, die (A) Propylen-alpha-Olefin-Copolymer, (B) Olefin-BlockCopolymer und (C) DPO-BSA-Molekularschmelze (MM) umfassen, die bei der Herstellung der oberen Hautschicht von Kunstleder-Mehrschichtstrukturen nützlich sind. CN 105 837 914 A offenbart ein PE (Polyethylen)-Kunstlederpackungsmaterial und ein Verfahren zu dessen Herstellung, wobei das PE-Kunstlederpackungsmaterial LDPE (Polyethylen niedriger Dichte), Antioxidationsmittel, Azodicarbonamid, Polybutadien, Neopren, Magnesiumoxid, EPDM (Ethylen-Propylen-Dien-Monomer), EVA (Ethylen-Vinylacetat), dreibasisches Bleisulfat und ein AC-Bildungsmittel umfasst.

Im Hinblick auf die oben angeführten Probleme, bestand daher ein Bedürfnis, ein verbessertes Kunstleder, bereitzustellen.

### Zusammenfassung der Erfindung

Im Rahmen der vorliegenden Erfindung wurde festgestellt, dass es möglich ist, die Ökobilanz von Kunstledern dadurch zu verbessern, dass nachwachsende Rohstoffe als Ausgangsmaterialien für die eingesetzten Kunststoffe verwendet werden.

Obwohl das Angebot an Kunststoffen aus nachwachsenden Rohstoffen sehr beschränkt ist, konnten geeignete Zusammensetzungen für Kunstleder entwickelt werden, die den (physikalischen und chemischen) Materialanforderungen genügen. Insbesondere erfordern Kunstleder eine spezielle Haptik, um eine Lederanmutung zu erzielen, wie auch eine hohe Flexibilität gepaart mit guter Reißfestigkeit.

Die sehr guten Materialeigenschaften der erfindungsgemäßen Kunstleder konnten durch Elektronenstrahlvernetzung sogar noch weiter in Richtung der Eigenschaften von natürlichen Ledern verbessert werden. Dies kann beispielsweise an dem niedrigen Hot Set Wert (< 50%, bestimmt durch die Wärmedehnungsprüfung für vernetzte Werkstoffe (DIN EN 60811-508, VDE 0473-811-507)) bei 200°C, der die Dehnbarkeit des Materials anzeigt, gesehen werden. Gleichzeitig kann überraschenderweise ein sehr guter Wert bezüglich der Flexibilität beibehalten werden, was an einem sehr niedrigen σ₁₀-Wert gesehen werden kann, wobei der σ₁₀-Wert die Festigkeit bei 10% Dehnung angibt.

Gute "Hot Set" Eigenschaften der hierin beschriebenen Materialien, verändern die Haptik und die Flexibilitätseigenschaften generell kaum. Aber die guten "Hot Set" Eigenschaften verbessern die Reißfestigkeit Eigenschaften über einen größeren Temperaturbereich.

Die Verwendung von nachwachsenden Rohstoffen führt zu einer verbesserten Ökobilanz und insbesondere zu einer Schonung der Erdölressourcen bzw. zu einer Vermeidung der mit deren Verbrauch verbundenen Umweltschädigungen. Zusätzlich kann die Verbraucherakzeptanz erhöht werden, da nachwachsende Rohstoffe gegenüber Erdöl einen besseren Ruf genießen. Insbesondere absorbiert das bei der Herstellung von Kunstleder verwendete Zuckerrohr während der Anbauphase CO₂ (60 Tonnen CO_{2/}Jahr/Hektar). Auch der Wasserverbrauch ist gegenüber echtem Leder signifikant geringer und es werden keine giftigen Chemikalien (zum Beispiel chromierte Verbindungen und Farbstoffe) wie bei der Echtlederverarbeitung eingesetzt.

Zudem ist Erdöl als Ressource wichtig für viele Anwendungen, bei denen man nicht ohne weiteres auf Ersatzstoffe umsteigen kann, und sollte für nachfolgende Generationen bestmöglich erhalten werden.

Eine Herausforderung bei der Herstellung von Kunstleder ist es, einen optischen und sensorischen Ledereindruck zu erzielen und gleichzeitig Materialeigenschaften zu erzielen, die mit dem Naturprodukt ebenfalls vergleichbar sind. Im Rahmen der vorliegenden Erfindung wurde beispielsweise festgestellt, dass die Verwendung von biobasierten Kunststoffen, wie LLDPE, leicht dazu führt, dass das Material zu steif wird. Da bislang nur sehr wenige biobasierten Weichmacher zur Verfügung stehen, führt der Einsatz von Weichmachern zu einer Erniedrigung des BBC-Werts (Bio Based Content). In erfindungsgemäßen Ausführungsformen ist daher bevorzugt entweder kein Weichmacher, oder nur ein biobasierter Weichmacher enthalten.

Im Gegensatz zu teil-biobasiertem Polyurethan, bei dem nur die Polyole aus Ausgangsmaterialien biobasiert sind, kann biobasiertes Polyethylen mit einem sehr hohen BBC Wert von z.B. 87% hergestellt werden. Wie oben erwähnt ist die Verwendung von PVC aufgrund seiner Ökobilanz keine Alternative zu Polyurethan. Insbesondere können die erfindungsgemäßen Schichtmaterialien verbesserte mechanische Eigenschaften gegenüber PU-Kunstleder aufweisen (siehe Beispiele).

Biobasiertes Polyethylen, insbesondere biobasiertes LLDPE, ist gut kommerziell verfügbar und kann mit einem hohen BBC Wert produziert werden. Allerdings hat sich im Rahmen der vorliegenden Erfindung gezeigt, dass LLDPE in Kunstleder nicht die gewünschte Flexibilität bereitstellen kann. Überraschenderweise konnten aber vorliegend Polyethylen-enthaltene Polymermischungen entwickelt werden die sowohl die erforderlichen Materialeigenschaften bereitstellen, als auch einen hohen BBC Wert aufweisen. Hierbei wird Polyethylen mit einem flexibleren zweiten Polymer kombiniert. Insbesondere die Kombination aus biobasiertem LLDPE und biobasiertem EPDM hat sich vorliegend als besonders vorteilhaft erwiesen. EPDM (Ethylen Propylen Dien Monomer) ist insbesondere deshalb vorteilhaft, da es sich auch sehr gut Elektronenstrahlvernetzen lässt.

Überraschenderweise sind die erfindungsgemäßen Zusammensetzungen, insbesondere die Kombination aus Polyethylen, bevorzugt LLDPE, und EPDM sehr gut Elektronenstrahlvernetzbar, und es sollten Kunstleder mit hoher Lederähnlichkeit sowohl hinsichtlich optischer, haptischer und sensorischer Eigenschaften, als auch mit hoher Performanceleistung erzeugt werden können.

### Detaillierte Beschreibung der Erfindung

Die Erfindung betrifft das Schichtmaterial und das Verfahren, wie in den Ansprüchen 1-13 definiert.

Der Füllstoff in Anspruch 1 ist insbesondere Calciumcarbonat, wie beispielsweise Kreide.

Bevorzugt weist zusätzlich auch die Deckschicht einen biobasierten Kohlenstoffanteil (BBC) von mindestens 50%, bestimmt nach ASTM D6866-16 Method B (AMS), auf. Die hierin beschriebenen bevorzugten Werte für den biobasierten Kohlenstoffanteil (BBC) gelten sowohl für die Schicht A, also auch die nicht-geschäumte Deckschicht.

Das Polyethylen als "erstes Polymer" kann beispielsweise in der geschäumten Schicht A in einer Menge von 0-20, 23-28, oder 20-35, bevorzugt aber in einer Menge von 0-12, oder 5-12 Gewichtprozent vorhanden sein und/oder das EPDM kann in einer Menge von 35-50 Gewichtsprozent, bevorzugt aber 35-80 oder 35-65 Gewichtsprozent vorhanden sein.

Die Lackschicht kann beispielsweise Acrylharz, Polyurethan und/oder Polytetrafluorethylen (Teflon) enthalten, oder daraus bestehen.

Schicht A kann auch 6-9, bevorzugt etwa 7,5, Gewichtsprozent Polyethylen, bevorzugt LLDPE, als erstes Polymer, und 55-65, bevorzugt etwa 60, Gewichtsprozent Ethylen-Propylen-Dien-Monomer (EPDM) als zweites Polymer aufweisen.

Ein weiteres Polymer kann in der geschäumten Schicht A vorliegen.

Die nicht-geschäumte Deckschicht kann beispielsweise 1-35 Gewichtsprozent Polyethylen als erstes Polymer, und 30-80 Gewichtsprozent Ethylen-Propylen-Dien-Monomer (EPDM) als zweites Polymer aufweisen.

Die Lackschicht ist bevorzugt 5-100 µm, weiter bevorzugt 5 bis 20 µm dick und enthält oder besteht bevorzugt aus Acrylharz, Polyurethan und/oder Polytetrafluorethylen (Teflon). Die Lackschicht verleiht dem Kunstleder UV Beständigkeit und eine angenehme Haptik.

Das Polyethylen kann in der geschäumten Schicht A in einer Menge von 0-15, bevorzugt 1-15 Gewichtprozent vorhanden sein und das zweite Polymer kann Ethylen-Propylen-Dien-Monomer (EPDM) sein und in einer Menge von 40-80, oder 40-70, bevorzugt 40-65 Gewichtsprozent vorhanden sein.

In einer Ausführungsform weist die geschäumte Schicht auf, bevorzugt besteht sie aus:
- 1-15 Gewichtprozent Polyethylen,
- 50-80 Gewichtsprozent Ethylen-Propylen-Dien-Monomer (EPDM), als zweites Polymer,
- 10-40 Gewichtsprozent Füllstoff(e), beispielsweise Kreide,
- 1-3 Gewichtsprozent expandierte Mikrohohlkugeln,
- 1-3 Gewichtsprozent Ethylen-Vinyl-Acetate Copolymer (EVA),
- 1-2 Gewichtsprozent Silikon-Additiv, und
- 0-0,5 Gewichtsprozent Antioxidans.

Die geschäumte Schicht A kann direkt auf einer Trägerschicht aufgebracht sein.

In einer Ausführungsform enthält die Schicht A weder Polyvinylchlorid noch Polyurethan.

Die ersten drei Schichten werden eng miteinander verbunden, da die Arbeitstemperatur während der Coextrusion oder während des Kalandrieren höher ist als die Erweichungstemperatur der geschäumten Schicht und der Deckschicht.

Der Lack wird dann in einem separaten Schritt als flüssige Dispersion auf die Deckschickt aufgebracht und getrocknet.

Vor dem Auftrag der Lackschicht kann es notwendig sein, eine Vorbehandlung, beispielsweise eine Oberflächenaktivierung durch eine Kaltplasma-Corona Behandlung, durchzuführen, um die Oberfläche der Deckschicht zu aktivieren und eine gute Haftung des Lacks zu ermöglichen.

Die Trägerschicht(en) bzw. Trägerfolie(n) muss/müssen einer Bestrahlung widerstehen können, da die Bestrahlung des Schichtmaterials einschließlich der Trägerschicht(en) bzw. Trägerfolie(n) erfolgt.

Die vorstehend genannten Ausführungsformen und weitere Ausführungsformen, die alle miteinander kombinierbar sind, werden nachfolgend näher beschrieben.

Das Schichtmaterial weist bevorzugt genau vier Schichten auf, bevorzugt besteht es daraus.

Eine der Schichten ist eine Schicht A, die eine geschäumte Schicht darstellt, wobei diese Schicht A bevorzugt aufweist:
- 0-35 Gewichtsprozent Polyethylen als erstes Polymer,
- 30-80 Gewichtsprozent eines zweiten Polymers, ausgewählt aus der Gruppe bestehend aus Ethylen-Propylen-Dien-Monomer (EPDM), Ethylen-Vinyl-Acetat-Copolymer (EVA), Polyethylen-Octen (POE), Ethylen-Butyl-Acrylat-Copolymer (EBA), und Ethylen-Methacrylat Copolymer (EMA);
- 10-40 Gewichtsprozent Füllstoff, insbesondere Calciumcarbonat, wie beispielsweise Kreide,

wobei der organische Bestandteil der (geschäumten) Schicht A einen biobasierten Kohlenstoffanteil (BBC) von mindestens 50%, oder mindestens 65%, bestimmt nach ASTM D6866-16 Method B (AMS), aufweisen, und
wobei das Schichtmaterial eine Dicke von bis zu 4 cm aufweist.

Das Schichtmaterial ist insbesondere eine geschäumte Folie oder besteht aus mehreren Folien, davon eine geschäumte Folie, insbesondere eine oder mehrere geschäumte Folien auf einer oder mehreren Trägerfolien bzw. Trägerschichten. Eine Trägerfolie bzw. Trägerschicht kann beispielsweise eine Baumwollschicht sein. Bei Bedarf können die verschiedenen Schichten bzw. Folien miteinander verklebt werden.

Das Schichtmaterial weist vier oder mehr Schichten mit folgender Abfolge auf:
- Textilträger-Schicht;
- geschäumte Schicht A;
- nicht-geschäumte Deckschicht; und
- Lackschicht.

Gegebenenfalls sind weitere Schichten vorhanden. Diese können dann außen, das heißt auf die Textilträger-Schicht oder die Lackschicht aufgebracht sein und/oder können zwischen der Textilträger-Schicht und der geschäumten Schicht A, und/oder der geschäumten Schicht A und der nicht-geschäumten Deckschicht, und/oder nicht-geschäumten Deckschicht und Lackschicht angeordnet sein.

Die Textilträgerschicht besteht aus Textilien, die Flexibilität und Reißfestigkeit bieten, beispielsweise Polyester oder Polyester/Baumwolle oder Baumwolle oder Leinenstoff, bevorzugt Baumwolle. Insbesondere werden hierbei gewobene oder nicht-gewobene (Fließ) Fasern verwendet.

Die geschäumte Schicht A hat einen Einfluss auf die Haptik, weil sie weich und flexibel ist.

Die Deckschicht ist die Schicht, die nach außen sichtbar ist. Daher muss die darüberliegende Lackschicht transparent sein. Deshalb bringt sie die Farbe mit und wird meistens mit einem Muster geprägt, bevorzugt mit Lederanmutung.

Die Lackschicht verleiht lederanmutende Eigenschaften bezüglich Gleitfähigkeit, dass heißt sie weist keine gummiartigen Hafteigenschaften auf.

Das Polyethylen in der geschäumten Schicht A kann ausgewählt sein aus der Gruppe bestehend aus VLDPE, LDPE, HDPE, und LLDPE, bevorzugt LLDPE. Es ist auch möglich, Kombinationen von Polyethylen-Arten zu verwenden.

Im Rahmen der vorliegenden Erfindung bezeichnet der Begriff VLDPE (very low density polyethylene bzw. Polyethylen mit sehr niedriger Dichte) bevorzugt ein Polyethylen mit einer Dichte im Bereich von 0,880 g/cm³ bis 0,915 g/cm³, bestimmt gemäß ISO 1183.

Im Rahmen der vorliegenden Erfindung bezeichnet der Begriff LDPE (low density polyethylene bzw. Polyethylen mit niedriger Dichte aufgrund stark verzweigter Polymerketten) bevorzugt ein Polyethylen mit einer Dichte im Bereich von größer 0,910 g/cm³ bis 0,940 g/cm³, bestimmt gemäß ISO 1183.

Im Rahmen der vorliegenden Erfindung bezeichnet der Begriff HDPE (high density polyethylene bzw. Polyethylen mit hoher Dichte) bevorzugt ein Polyethylen mit einer Dichte von mindestens 0,940 g/cm³, beispielsweise bis 0,970 g/cm³ bestimmt gemäß ISO 1183.

Im Rahmen der vorliegenden Erfindung bezeichnet der Begriff LLDPE (linear low density polyethylene bzw. lineares Polyethylen mit niedriger Dichte, dessen Polymermoleküle nur kurze Verzweigungen aufweisen) bevorzugt ein Polyethylen mit einer Dichte im Bereich von 0,915 g/cm³ bis 0,925 g/cm³, bestimmt gemäß ISO 1183.

Die Dicke des Schichtmaterials ist bis zu 4 cm und ist von der Art der Anwendung bzw. dem herzustellenden Endprodukt abhängig. Die Dicke kann auch nur bis zu 2 cm, beispielsweise 0,01 cm bis 1,0 cm oder 0,01 bis 0,5 cm betragen. Die (bevorzugt geschäumte) Schicht A kann beispielsweise eine Dichte zwischen 0,3 und 1,2 g/cm³, beispielsweise 0,5 und 0,8 g/cm³, aufweisen.

Die Gesamtmenge des ersten und des zweiten Polymers in der (geschäumten) Schicht A kann beispielsweise mindestens 50 Gewichtsprozent, oder 60 Gewichtsprozent, beispielsweise 60-90 Gewichtsprozent betragen. Die Gesamtmenge hängt von der Menge an verwendeten Füllstoffen ab. Die Verwendung von Füllstoffen macht ein Produkt billiger, wobei sich jedoch eine steigende Menge an Füllstoffen negativ auf die Materialeigenschaften auswirkt. Überraschenderweise sind die Materialeigenschaften des erfindungsgemäßen Schichtmaterials sehr gut, obwohl eine Menge an Füllstoff von ca. 30% eingesetzt worden ist (siehe Beispiele).

Die geschäumte Schicht A kann auch weitere Polymere enthalten, beispielsweise ein oder zwei weitere Polymere. Diese weiteren Polymere können beispielsweise in einer Menge von 1-20 Gewichtprozent oder 1-10 Gewichtsprozent vorliegen. Bevorzugt enthält die geschäumte Schicht A aber weder Polyvinylchlorid noch Polyurethan.

Die geschäumte Schicht A kann unter Verwendung eines Treibmittels, z.B. Azodicarboxamid oder Mikrohohlkugeln, beispielsweise in einer Menge von 0,2-10, oder 0,2-3%, Gewichtsprozent extrudiert werden. Die Extrusion kann beispielsweise bei 120°C-230°C erfolgen. Die Extrusion kann mit und ohne Mischelementen durchgeführt werden. Ebenso ist es möglich, die Schicht in einem Kalandrierverfahren herzustellen, wobei beheizte Walzen verwendet werden, beispielsweise mit einer Temperatur von 100 bis 170°C, bevorzugt 120 bis 150°C, weiter bevorzugt 130 bis 140°C.

Bevorzugt führt die Verwendung des Treibmittels zu einer Schaumstruktur mit einem Porendurchmesser von weniger als 300 µm, bevorzugt weniger als 200 µm, beispielsweise weisen die Poren einen Durchmesser zwischen 10 und 200 µm auf.

Der Porendurchmesser kann mit Hilfe eines Elektronenmikroskops oder Lichtmikroskops bestimmt werden. Beispielsweise ist das Merkmal, dass die Poren einen Durchmesser zwischen 10 und 200 µm aufweisen dann erfüllt, wenn 20 Poren in einem Umkreis um eine gewählte Pore sämtlich den erforderlichen Durchmesser aufweisen.

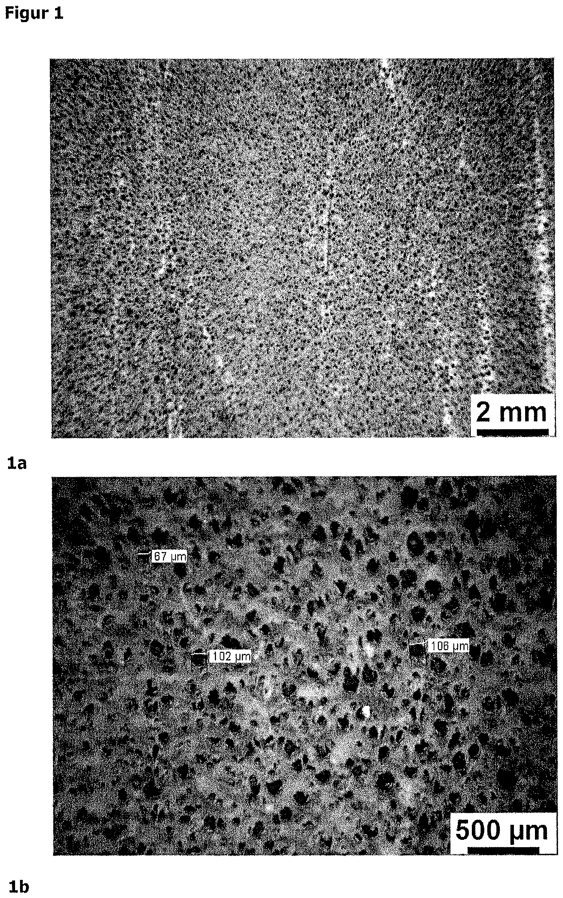

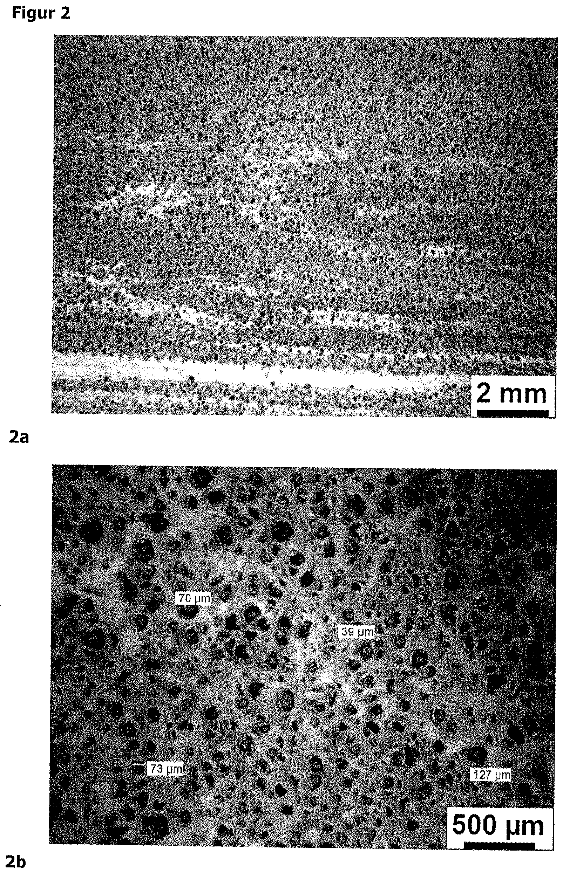

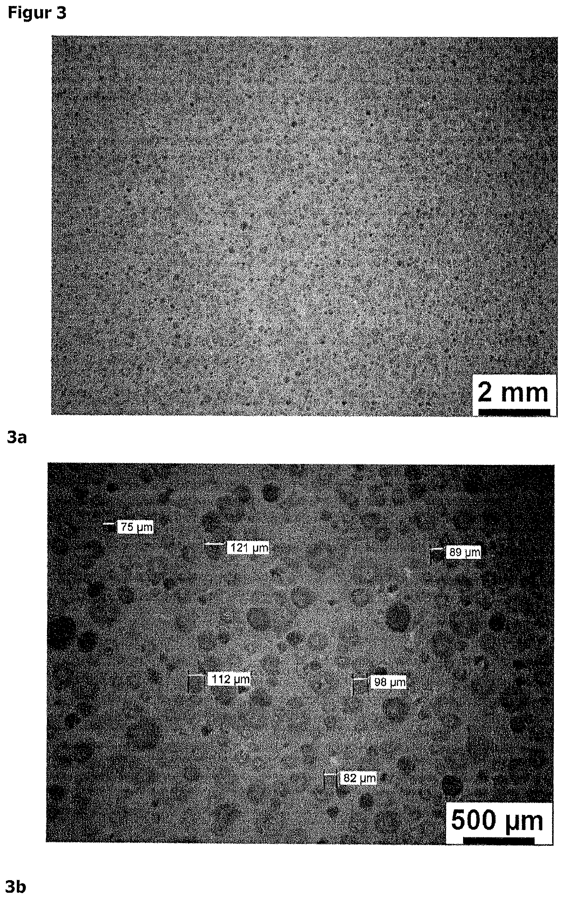

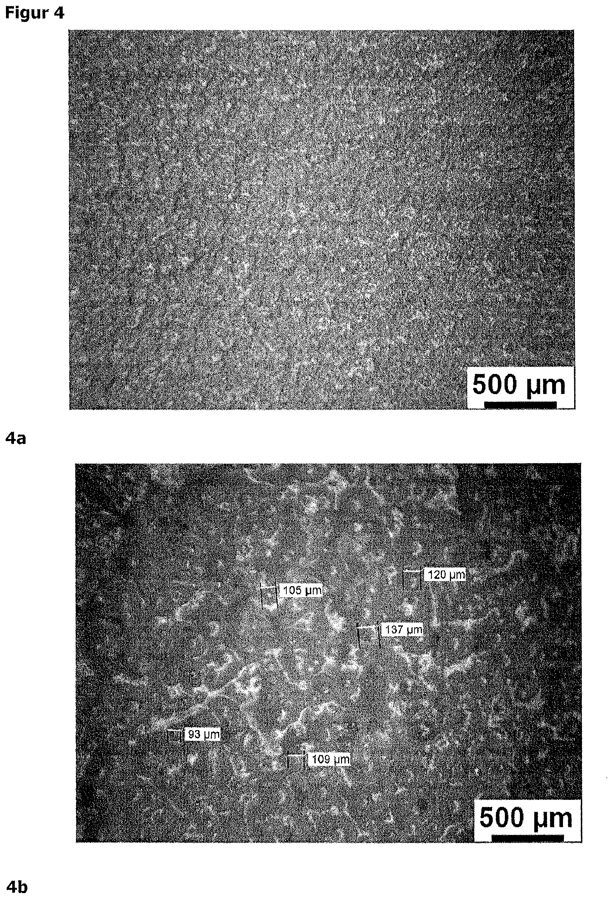

Die Mikrosphären/Mikrohohlkugeln werden während der Compoundierung (Mischung von allen Rohstoffen) bevorzugt nicht mitgemischt, sondern erst während der Extrusion oder dem Kalandrieren eingesetzt. Das extrudierte/kalandrierte Schichtmaterial ist dann voll mit Mikroblasen (beispielsweise ca. 50 bis ca. 150 um Durchmesser, siehe Figuren 1-4). Das Schichtmaterial wird so noch flexibler, und auch angenehmer (Soft Touch). Gleichermaßen können gasentwickelnde chemische Treibmittel verwendet werden. Dies ist kostengünstiger als Mikrosphären/Mikrohohlkugeln.

Die geschäumte Schicht A kann mit Elektronenstrahlen strahlenvernetzt werden, um gewünschte Materialeigenschaften zu erzielen. Bei der Elektronenstrahlvernetzung können Anlagen eingesetzt werden, die Elektronen mittels einer Hochspannung von bis zu 10 Millionen Volt im Hochvakuum annähernd auf Lichtgeschwindigkeit beschleunigen. Die Vorrichtung hierfür weist neben einem Hochspannungserzeuger eine Beschleunigerröhre auf, die die Elektronen über einen Ablenkmagneten auf die zu bestrahlende Fläche lenken. Mit Elektronenbeschleunigern wird das Schichtmaterial innerhalb weniger Sekunden vernetzt. Die homogene Bestrahlung und damit homogene Vernetzung wird durch speziell angepasste Handlingsysteme gewährleistet. Hierbei wird der Elektronenstrahl in X- und Y Richtung ausgelenkt, um ein homogenes Strahlungsfeld zu erzeugen, durch das das Produkt (Kunstleder) kontinuierlich ein- oder mehrfach durchgeführt wird, um die Vernetzung zu bewirken.

Bei der Strahlenvernetzung werden keine Peroxyde oder Silane wie bei der chemischen Vernetzung in die Kunststoffmischungen eingearbeitet. Im Kunststoff entstehen deshalb auch weniger oder keine Folge- oder Spaltprodukte wie Wasser, Methan, Alkohol, etc. Durch die Vernetzung werden die Fadenmoleküle (in der amorphen Phase) miteinander chemisch verknüpft. Dabei entsteht ein dreidimensionales Netzwerk. Die Fadenmoleküle können sich (unabhängig von der Temperatur) nicht mehr frei bewegen. Oberhalb der Schmelztemperatur kann das Material nicht mehr fließen, sondern geht in einen gummielastischen Zustand über. Das Mengenverhältnis zwischen dem ersten und dem zweiten Polymer bzw. gegebenenfalls vorhandenen weiteren Polymeren kann mittels Infrarot-Spektroskopie ermittelt werden.

Die geschäumte Schicht A, beispielsweise 0.1 cm dick, kann mit einer Spannung von 1.05 MeV, mit einer Energie von mindestens 50 kGy, 100 kGy, 150 kGy, 200 kGy, oder 250 kGy, Elektronenstrahlvernetzt sein. Die Energiemenge der Strahlung kann je nach gewünschter Materialeigenschaft gewählt werden, wobei eine höhere Energie zu einer höheren Vernetzung führt und somit zu einer geringeren Flexibilität aber auch geringerem Hot Set Wert führt. Die Schicht A kann einen Hot Set bei 200°C von weniger als 100%, bevorzugt weniger als 50% oder weniger als 30%, beispielsweise 10-30%, aufweisen, gemessen nach DIN EN 60811-507 (VDE 0473-811-507) - Wärmedehnungsprüfung für vernetzte Werkstoffe. Beispielsweise bedeutet ein Wert "30/10": Hot Set 30% (+30% Dehnung bei 200°C nach 15 Minuten (unter in der Norm definierten Belastung, üblicherweise 20 N/cm²)/ Hot Set 10% (+10% Dehnung bei 200°C nach 5 Minuten nach Entlastung (kein Gewicht mehr)).

Bei dem Vorgang des Vernetzens verändert sich die Struktur zumindest der Schicht A (und bei genügend hoher Spannung auch innen, wobei die Spannung passend gewählt wird). Typischerweise ist ein Elektronenstrahl von 10MeV bei einer Materialdichte von 1g/cm³ in der Lage, 40 mm tief einzudringen. Bevorzugt wird ein Vernetzungsgrad von mindestens 50%, bevorzugt mindestens 60%, oder mindestens 70%, weiter bevorzugt mindestens 80%, beispielsweise 70-90%, erzielt. Der Vernetzungsgrad kann mittels bekannter Extraktionsverfahren bestimmt werden, insbesondere gemäß DIN EN ISO 10147:2013 oder DIN ISO 6427.

Der organische Bestandteil der Schicht A weist einen biobasierten Kohlenstoffanteil von mindestens 50%, mindestens 60%, bevorzugt mindestens 70%, bestimmt nach ASTM D6866-16 Method B (AMS), auf. Der biobasierte Kohlenstoffanteil bezieht sich auf alle Kohlenstoff-haltigen Bestandteile der Schicht A, einschließlich organischer Füllstoffe und Additive. Bevorzugt beträgt auch der BBC der organischen Bestandteile ohne Füllstoffe mindestens 50%, mindestens 60%, bevorzugt mindestens 70%, bestimmt nach ASTM D6866-16 Method B (AMS).

Die Schicht A kann einen σ₁₀-Wert von kleiner als 10 MPa, bevorzugt kleiner als 7 MPa, beispielsweise 0,5-7 MPa, oder 0,5-3 MPa, gemessen an einer 1 mm-Platte, aufweisen, gemessen nach DIN EN 60811-501 (VDE 0473-811-501)

Als Treibmittel kann in der geschäumten Schicht A (oder in einer anderen geschäumten Schicht des Schichtmaterials) ein expandierbarer Leichtfüllstoff verwendet werden. Beispielsweise können expandierte Mikrohohlkugeln, bevorzugt Polymer-basierte Mikrohohlkugeln (beispielsweise EXPANCEL von der Firma AKZO NOBEL oder ADVANCEL von der Firma SEKISUI) oder mineralische Mikrohohlkugeln (z.B. Alumino-Silikate), enthalten sein.

Silikonadditive kommen insbesondere zur Verbesserung der Material Verarbeitbarkeit in Frage, insbesondere Polydimethylsiloxane können zum Einsatz kommen, beispielsweise das Additiv DC 50-320 von der Firma DOW CORNING, eventuell auch das Tegomer V-Si 4042 oder das Tegopren 5885 von der Firma EVONIK. Weitere Zusatzstoffe, die im Rahmen der vorliegenden Erfindung beispielsweise verwendet werden können sind Antioxidantien (z.B. Songnox 1010 von der Firma Songwong, oder Ethanox 310 von der Firma Albemarle), UV-Absorber (Tinuvin 111 und Chimassorb von der Firma BASF, Hostavin von der Firma Clariant), Hindered Amine Light Stabilizers (HALS, UV + Antioxidans). Zusatzstoffe können beispielsweise in Mengen von 0-10 Gewichtsprozent, bevorzugt 0,5-3 Gewichtsprozent verwendet werden.

Das Schichtmaterial ist insbesondere in der Form eines Kunstleders ausgebildet. Hierbei kann das Schichtmaterial ebenfalls vernetzt oder unvernetzt eingesetzt werden. Um Kunstleder zu erzeugen, können Folien hergestellt werden, die auf eine Trägerschicht aufgebracht werden. Das Schichtmaterial ist somit in der Form einer Folie oder eines Bands. Folien können beispielsweise mit einer Breitschlitzdüse in einer Breite von 2-3m extrudiert werden oder mit einem Walzwerk kalandriert werden.

Das zweite Polymer in der Schicht A kann beispielsweise Ethylen-Propylen-Dien-Monomer (EPDM), oder Ethylen-Vinyl-Acetate Copolymer (EVA) sein. Beispielsweise kann das Polyethylen in der Schicht A ein LLDPE sein und das zweite Polymer Ethylen-Vinyl-Acetate Copolymer (EVA) sein. Alternativ dazu kann das Polyethylen in der Schicht A ein LLDPE sein und das zweite Polymer Ethylen-Propylen-Dien-Monomer (EPDM) sein.

In einer Ausführungsform ist das Polyethylen in der geschäumten Schicht A in einer Menge von 0-15, oder 5-15, bevorzugt 5-12 Gewichtprozent vorhanden und das zweite Polymer ist bevorzugt Ethylen-Propylen-Dien-Monomer (EPDM) und ist in einer Menge von 30-80, oder 60-80 Gewichtsprozent vorhanden.

In einer Ausführungsformen weist die geschäumte Schicht A auf, bevorzugt besteht sie aus:
- 0-15 oder 1-15 Gewichtprozent Polyethylen,
- 50-80 Gewichtsprozent Ethylen-Propylen-Dien-Monomer (EPDM), als zweites Polymer,
- 10-40 Gewichtsprozent Füllstoff(e), beispielsweise Kreide,
- 1-3 Gewichtsprozent expandierte Mikrohohlkugeln,
- 0-3 Gewichtsprozent Silikon Additiv
- 0,5-3 Gewichtsprozent Antioxidant und UV-Absorber.

Grundsätzlich ist die Auswahl der Füllstoffe nicht beschränkt. Bei Kohlenstoffbasierten organischen Füllstoffen ist ein hoher BBC-Wert erforderlich, um auf den gewünscht hohen BBC-Wert für die gesamte Schicht A zu gelangen. Mögliche Füllstoffe sind beispielsweise: Kreide, Holzfasern, Holzpulver, getrocknetes Apfelpulver, Kaolin, Talkum, Aluminiumtrihydroxid (ATH), und Magnesiumdihydroxid (MDH).

Die Füllstoffe können auch als Mischungen eingesetzt werden.

Im Hinblick auf die Ökobilanz des Schichtmaterials ist ein natürlicher Füllstoff bevorzugt, beispielsweise Calciumcarbonat (wie Kreide), Holzfasern, Holzpulver, getrocknetes Apfelpulver, Kaolin, oder Talkum, bzw. Mischungen darauf. Bei Füllstoffen auf pflanzlicher Basis kann der BBC der gesamten Schicht hoch sein.

In einer Ausführungsformen weist die geschäumte Schicht A auf, bevorzugt besteht sie aus:
- 0-20 oder 5-12 Gewichtprozent Polyethylen,
- 35-65 Gewichtsprozent Ethylen-Propylen-Dien-Monomer (EPDM), als zweites Polymer,
- 20-35 Gewichtsprozent Füllstoff(e), beispielsweise Kreide,
- 1-3 Gewichtsprozent expandierte Mikrohohlkugeln oder keine festen Expandiermittel,
- 1-3 Gewichtsprozent Ethylen-Vinyl-Acetate Copolymer (EVA),
- 1-2 Gewichtsprozent Silikon-Additiv (Silikon + EVA), und
- 0-0,5 Gewichtsprozent Antioxidans.

Das Ethylen-Vinyl-Acetate Copolymer (EVA) kann als Mischung mit einem SilikonPolymer eingesetzt werden, z.B. Dow Corning MB 50-320 (EVA/Silikon, 50/50). Eine Erhöhung des Anteils an Füllstoffen macht das Produkt kostengünstiger, jedoch führt es zu einer Verringerung der Flexibilität.

In einer Ausführungsform des Schichtmaterials weist die geschäumte Schicht A folgende Bestandteile auf, bevorzugt besteht sie aus:
- 0-20 Gewichtprozent Polyethylen,
- 35-65 Gewichtsprozent Ethylen-Propylen-Dien-Monomer (EPDM), als zweites Polymer,
- 20-35 Gewichtsprozent Füllstoff(e), bevorzugt Kreide oder Holzfasern,
- 1-3 Gewichtsprozent expandierte Mikrohohlkugeln aus organischem Polymer, oder keine festen Expandiermittel,
- 0-2 Gewichtsprozent Silikon-Additiv, und
- 0-0,5 Gewichtsprozent Antioxidans.

In einer weiteren Ausführungsform des Schichtmaterials weist die geschäumte Schicht A folgende Bestandteile auf, bevorzugt besteht sie aus:
- 1-10, bevorzugt 6-9, Gewichtprozent Polyethylen,
- 60-80 Gewichtsprozent Ethylen-Propylen-Dien-Monomer (EPDM), als zweites Polymer,
- 10-40 Gewichtsprozent Füllstoff(e), bevorzugt Kreide oder Holzfasern,
- 1-3 Gewichtsprozent expandierte Mikrohohlkugeln aus organischem Polymer,
- 0-2 Gewichtsprozent Silikon-Additiv, und
- 0-0,5 Gewichtsprozent Antioxidans.

In einer weiteren Ausführungsform des Schichtmaterials weist die geschäumte Schicht A folgende Bestandteile auf, bevorzugt besteht sie aus:
- 1-10, bevorzugt 6-9, Gewichtprozent Polyethylen,
- 60-80 Gewichtsprozent Ethylen-Propylen-Dien-Monomer (EPDM), als zweites Polymer,
- 10-40 Gewichtsprozent Füllstoff(e), bevorzugt Kreide oder Holzfasern,
- 1-3 Gewichtsprozent gasentwickelndes chemisches Treibmittel,
- 0-2 Gewichtsprozent Silikon-Additiv, und
- 0-0,5 Gewichtsprozent Antioxidans.

Zusätzlich kann die geschäumte Schicht A Pigmente und/oder Farbstoffe enthalten.

Wenn das Schichtmaterial mehr als eine Schicht aufweist, kann die Schicht A auf einer Trägerschicht aufgebracht sein, beispielsweise einer Gewebeschicht. Die Gewebeschicht kann beispielsweise aus Baumwolle, Flachsfaser und Polyester, z.B. 50 Gewichtsprozent Baumwolle und 50 Gewichtsprozent Polyester, besteht. Um einen hohen BBC-Wert des gesamten Schichtmaterials zu erreichen, kann auch die Trägerschicht und jede weitere Schicht einen hohen BBC-Wert aufweisen. Das Schichtmaterial kann dann insgesamt einen BBC von mindestens 50%, bevorzugt mindestens 70% oder sogar mindestens 80%, bestimmt nach ASTM D6866-16 Method B (AMS), aufweisen.

Bevorzugt enthält das Schichtmaterial keine Weichmacher, oder nur biobasierte Weichmacher. Die Verwendung von nicht biobasierten Weichmacher würde zu einer Erniedrigung des BBC-Werts der Schicht A führen, was nicht wünschenswert ist.

In einer Ausführungsform ist das Schichtmaterial vegan bzw. es sind keine tierischen Ausgangsmaterialien enthalten.

Die Erfindung betrifft zudem ein Verfahren zur Herstellung des Schichtmaterials nach einer der vorangegangenen Ausführungsformen, aufweisend:
a) Bereitstellen der Zusammensetzung für die (bevorzugt geschäumte) Schicht A gemäß einer der hier beschriebenen Ausführungsformen, beispielsweise der Ausführungsformen 1-30,
b) Extrudieren oder Kalandrieren der Zusammensetzung aus Schritt (a) zu einem Schichtmaterial.

Weiterhin kann das Verfahren folgenden Schritt aufweisen:
c) Strahlenvernetzen der (bevorzugt geschäumten) Schicht A mit Elektronenstrahlen, wobei dadurch bevorzugt auch die Deckschicht vernetzt wird, unter kontinuierlicher Durchführung der Schicht A oder des gesamten Schichtmaterials durch eine Vorrichtung zum Bestrahlen.

In einem weiteren Schritt kann die extrudierte/kalandrierte (bevorzugt geschäumte) Schicht A auf eine Trägerschicht aufgebracht werden. Je nachdem ob die Trägerschicht(en) bzw. Trägerfolie(n) einer Bestrahlung widerstehen, kann die Bestrahlung vor oder nach dem Aufbringen der (bevorzugt geschäumten) Schicht A auf die Trägerschicht(en) bzw. Trägerfolie(n) erfolgen.

Die Extrusion erfolgt bevorzugt unter Verwendung von Mischelementen. Dies führt dazu, dass die Verteilung der Farbstoffe und Mikrobläschen homogener wird.

Die Erfindung betrifft somit zudem auch ein Schichtmaterial, hergestellt unter Verwendung des erfindungsgemäßen Verfahrens. Die Erfindung betrifft auch ein Schichtmaterial mit vier oder mehr Schichten wie oben beschrieben, wobei die folgende Zusammensetzung für Schicht A extrudiert/kalandriert wird:
- 0-35, bevorzugt 5-15, 1-10, Gewichtsprozent Polyethylen als erstes Polymer,
- 30-80 Gewichtsprozent eines zweiten Polymers, ausgewählt aus der Gruppe bestehend aus Ethylen-Propylen-Dien-Monomer (EPDM), Ethylen-Vinyl-Acetat Copolymer (EVA), Polyethylen-Octen (POE), Ethylen-Butyl-Acrylat-Copolymer (EBA), und Ethylen-Methacrylat Copolymer, bevorzugt EPDM;
- 10-40 Gewichtsprozent Füllstoff, insbesondere Calciumcarbonat, wie beispielsweise Kreide,
wobei der organische Bestandteil der geschäumten Schicht einen biobasierten Kohlenstoffanteil (BBC) von mindestens 50%, bestimmt nach ASTM D6866-16 Method B (AMS), aufweisen, und wobei das Schichtmaterial eine Dicke von bis zu 4 cm aufweist. Diese Ausführungsform kann mit allen hierin beschriebenen Ausführungsformen kombiniert werden, insbesondere Ausführungsformen 2-30.

In einer Ausführungsform der Erfindung, die mit allen hierein beschriebenen Ausführungsformen kombiniert werden kann, insbesondere Ausführungsformen 2-30, betrifft die Erfindung ein Schichtmaterial mit mindestens einer (bevorzugt geschäumten) Schicht A, aufweisend:
- 0-35, bevorzugt 1-10, Gewichtsprozent Polyethylen als erstes Polymer,
- 50-90, bevorzugt 60-80, Gewichtsprozent eines zweiten Polymers, ausgewählt aus der Gruppe bestehend aus Ethylen-Propylen-Dien-Monomer (EPDM), Ethylen-Vinyl-Acetat-Copolymer (EVA), Polyethylen-Octen (POE), Ethylen-Butyl-Acrylat-Copolymer (EBA), und Ethylen-Methacrylat Copolymer (EMA);
- 10-40 Gewichtsprozent Füllstoff, insbesondere Calciumcarbonat, wie beispielsweise Kreide,

wobei der organische Bestandteil der (geschäumten) Schicht einen biobasierten Kohlenstoffanteil (BBC) von mindestens 50%, bestimmt nach ASTM D6866-16 Method B (AMS), aufweist, und
wobei das Schichtmaterial eine Dicke von bis zu 4 cm aufweist.

### Definitionen:

Der Ausdruck "Gewichtsprozent" bezieht sich auf das Gesamtgewicht der Zusammensetzung.

Der Ausdruck "Polymer", so wie hierin verwendet, bezieht sich auf Moleküle mit hoher Anzahl an Wiederholungseinheiten (Monomere), die miteinander verbunden sind, wobei organische Monomere bevorzugt sind. Eine Art von Polymer (z.B. das "erste Polymer") unterscheidet sich von einer anderen Art von Polymer (z.B. dem "zweiten Polymer") durch die Art der Monomere. Der Ausdruck "Copolymer", so wie hierin verwendet, bezieht sich auf ein Polymer mit mehr als einer Art von Monomeren.

Der Ausdruck "biobasiert" wird vorliegend nur auf Kohlenstoff-enthaltende organische Materialien bezogen, wobei der "BBC" bzw. "biobased content" angibt, wieviel biobasierter Kohlenstoff, bezogen auf den Gesamtkohlenstoff, vorhanden ist. Bei einem Erdöl-abgeleiteten Material ist der BBC gleich 0%. Bei einem Polymer, das nur aus nachwachsenden Rohstoffen hergestellt worden ist, ist der BBC gleich 100%.

Biobasierter Kohlenstoff weist einen hohen Gehalt an ¹⁴C-Isotop auf. Da sich das ¹⁴C-Isotop nur durch Bestrahlung in der Atmosphäre bildet und langsam zerfällt, weist Erdöl-abgeleitetes Material, welches der Strahlung in der Atmosphäre lange Zeit nicht ausgesetzt war keine ¹⁴C-Isotope auf. Hingegen weist eine Pflanze, die in den letzten Jahren (1-1000 Jahren, oder 1-500, oder 1-100 Jahren) CO₂ aus der Atmosphäre verstoffwechselt hat einen hohen Gehalt an ¹⁴C-Isotope auf.

Der BBC-Wert bzw. biobasierte Anteil kann unter Verwendung des Standards "ASTM D6866-16 Method B (AMS)" bestimmt werden (Referenz insbesondere Oxalsäure II), insbesondere unter Verwendung von AMS (accelerator mass spectroscopy/Beschleuniger-Massenspektrometrie). Hierbei wird der Gesamtgehalt an organischem Kohlenstoff in dem zu betrachtetem Material, z.B. dem erfindungsgemäßen Schichtmaterial bzw. der (geschäumten) Schicht A davon, oder einem Bestandteil des Schichtmaterials, zugrunde gelegt und der Anteil an ¹⁴C-Isotop bestimmt. Hierzu wird der organische Kohlenstoff oxidativ (z.B. durch Verbrennung oder Reaktion mit reduziertem Kupferoxid (Metalldraht/Pulver), z.B. bei 900° (aber unterhalb der Temperatur die zum Kalkbrennen führt bzw. zu einem Oxidieren anderer vorhandener anorganischer Füllstoffe) in CO₂ überführt. Anorganische Materialien wie Calciumcarbonat bleiben dann inert und werden nicht mitbestimmt. Das erzeugte CO₂ wird dann in einer Serie von Trockeneis/Methanol-Wasserfallen (~-78°C) und abhängig von der Art der Probe bei Bedarf noch in einer Serie von Stickstoff/Pentan-Fallen (~-129°C) gereinigt. Die Erzeugung von elementarem Kohlenstoff (Graphit) für die AMS-Messung erfolgt dann beispielsweise mittels der Bosch-Reaktion (Manning MP, Reid RC., "C-H-O systems in presence of an iron catalyst" Industrial & Engineering Chemistry Process Design and Development 1977, 16:358-61). Siehe auch Vogel et al., "Performance of catalytically condensed carbon for use in accelerator mass spectrometry" Nuclear Instruments and Methods in Physics Research 1984 B 5(2):289-93. Die Eichung der Messung erfolgt auf der Basis des Oxalsäure II Standards.

Laut US2013022771 entspricht ein BBC von 1% einem ¹⁴C/¹²C-Isotopenverhältnis von 1,2×10⁻¹⁴.

Der Ausdruck "natürlich" bedeutet im Zusammenhang mit einem Bestandteil des erfindungsgemäßen Schichtmaterials, dass der Bestandteil in seiner verwendeten Form in der Natur vorkommt und nicht synthetisch hergestellt worden ist. Beispielsweise sind Füllstoffe wie Holzpulver und Kreide, sowie bestimmte mineralische Füllstoffe (z.B. Carbonate, Hydroxide, Sulfate, Oxide, oder Silikate) "natürlich", wohingegen organische Polymere, chemisch modifizierte (Silanmodifizierte) Materialien, oder bestimmte mineralische Füllstoffe (z.B. gefällte Carbonate Pyrogene Kieselsäure, oder gefällte Hydroxide) als "synthetisch" bzw. "nicht-natürlich" einzustufen sind.

Im Rahmen der vorliegenden Erfindung sind daher grundsätzlich Materialien mit einem biobasierten Kohlenstoffanteil von mindestens 50%, mindestens 70%, bevorzugt mindestens 80%, bestimmt nach ASTM D6866, bevorzugt.

Beispielsweise bietet die Firma Braskem (Brasilien) oder die Firma FKuR (Deutschland) ein biobasiertes Polyethylen (LLDPE) mit einem BBC von größer als 87% an. Biobasiertes EPDM mit einem BBC von 70% ist beispielsweise von der Firma ARLANXEO (Niederlande) erhältlich.

Die vorliegende Offenbarung soll weiter anhand von Figuren erläutert werden:
- Figur 1a/b: zeigt das Schichtmaterial VKL068 mit 1% Expancel 950MB80, extrudiert bei 200°C (ohne Misch Elementen) bei unterschiedlichen Vergrößerungen. Bevor die Aufnahme gemacht wurde, wurde die Testprobe (bzw. das Band) gespalten. Das Ziel der Spaltung der Probe besteht darin, in der Lage zu sein, den Kern des Materials und insbesondere die Art, in der der Farbstoff dispergiert ist, sowie die Verteilung und die Größe der Mikrobläschen nach dem Expandieren der Mikrosphären während der Extrusion zu beobachten. Hierbei bedeutet "...extrudiert ... ohne Misch Elementen...", dass die Schnecke im Extruder nur mit Förderelementen aufgebaut ist. Prinzipiell gibt es für eine Schnecke von einem Extruder die Förderelemente (diese dienen insbesondere zur Förderung der Masse), und die Mischelemente (die dienen insbesondere zur besseren Durchmischung/Einarbeitung der verschiedenen Komponenten). Deshalb kann man beobachten, dass die Verteilung der Komponenten mit den Mischelementen besser/homogener ist.
Bildaufnahmeverfahren: Die Probe, die als dünne Schicht fotografiert werden soll, wird auf den Probenhalter eines LEICA MS5 Mikroskops gelegt. Die gewünschte Vergrößerung wird ausgewählt, und ein Foto wird unter Verwendung einer JENOPTIK-Kamera von Model ProgRes Speed XT Core 5 aufgenommen.
- Figur 2a/b: zeigt das Schichtmaterial VKL070 mit 1% Expancel 950MB80, extrudiert bei 180°C (ohne Misch Elementen) bei unterschiedlichen Vergrößerungen. Bevor die Aufnahme gemacht wurde, wurde die Testprobe gespalten.
- Figur 3a/b: zeigt das Schichtmaterial VKL070 mit 1.5% Expancel 950MB120, extrudiert bei 200°C (mit Misch Elementen) bei unterschiedlichen Vergrößerungen. Bevor die Aufnahme gemacht wurde, wurde die Testprobe gespalten. Es konnte beobachtet werden, dass die Dispersion des Farbmasterbatch und die Verteilung der Mikrobläschen homogener wird, wenn Mischelemente während der Extrusion verwendet werden. Hierbei bedeutet "...extrudiert ... mit Misch Elementen...", dass die Schnecke im Extruder mit Förderelementen und Mischelementen aufgebaut ist.
- Figur 4a/b: zeigt das Schichtmaterial VKL070 mit 1.5% Expancel 950MB120, extrudiert bei 200°C (mit Misch Elementen) bei unterschiedlichen Vergrößerungen. Die Aufnahmen wurden von der Bandoberfläche gemacht.

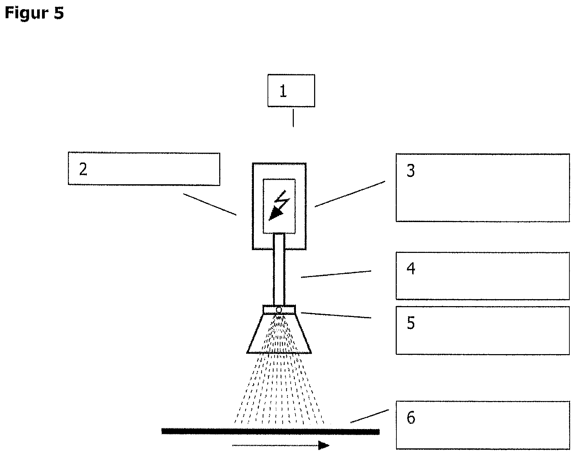

- Figur 5: zeigt den Aufbau eines Geräts zum Strahlenvernetzen, wobei die Bezugszeichen wie folgt sind: 1: Gerät zum Strahlenvernetzen; 2: Beschleuniger; 3: Hochspannungserzeuger Drucktank mit SF₆-Gas; 4 Beschleunigerrohre; 5: Ablenkmagnet; 6: Schichtmaterial.

### Beispiele

Die Herstellung von erfindungsgemäßen Schichtmaterialien kann wie nachstehend beschrieben durchgeführt werden.

In einem ersten Schritt geht es darum, die verschiedenen Komponenten des Compounds, das dann für die Extrusion oder das Kalandrieren des Schichtmaterials verwendet wird, homogen zu vermischen. Ein Busskneter kann dazu vorteilhaft verwendet werden. Zuerst muss das gesamte Compoundierungssystem gereinigt und zusammengebaut werden. Die verschiedenen Rohmaterialien, außer dem Treibmittel, beispielsweise Expancel-Mikrosphären, und den Farbmasterbatch, werden entsprechend der gewünschten Zusammensetzung für das Compound in den Busskneter dosiert / eingearbeitet.

Das Temperaturprofil wird entsprechend den Rohmaterialien so gewählt, dass eine ausreichende Scherung eine gute Verteilung der verschiedenen Komponenten ermöglicht. Die Compound Masse wird granuliert und die entsprechenden Granulate werden dann bis zur Raumtemperatur abgekühlt.

In einem zweiten Schritt geht es darum, mit den Granulaten, wie oben hergestellt, eine Folie zu extrudieren oder zu kalandrieren. Zum Beispiel, ein Extruder mit einer Breitschlitzdüse, deren Breite abhängig von der Breite der herzustellenden Kunstlederspule bzw. des herzustellenden Schichtmaterials gewählt wird, kann dazu vorteilhaft verwendet werden. Zuerst muss das gesamte Extrusion System gereinigt und zusammengebaut werden. Die Granulate, diesmal mit dem Treibmittel für die geschäumte Schicht, beispielsweise den Expancel-Mikrosphären, und den Farbmasterbatch, werden entsprechend der gewünschten Zusammensetzung für das Compound im Extruder dosiert und/oder eingearbeitet. Bevorzugt wird eine Schnecke mit Förder- und Mischelementen verwendet, so dass die Mikrosphären und das Farbmasterbatch gut und homogen verteilt werden können.

Das Temperaturprofil wird in Abhängigkeit von den Ausgangsmaterialien (Compound in Granulat Form) und insbesondere gemäß den Arten von Mikrosphären gewählt, um eine optimale Expansion der Mikrosphären zu ermöglichen.

Für die Deckschicht, die mit der geschäumten Schicht coextrudiert wird, wird kein Treibmittel eingesetzt. Das Compound für die Deckschicht kann das gleiche Compound wie für die geschäumte Schicht sein. Das Compound kann sich jedoch geringfügig unterscheiden, ist jedoch in jedem Fall auch biobasiert. Es enthält aber kein Treibmittel. Beide Compounds werden dann auf einem Textilträger Material (Baumwolle, Baumwoll/Polyester...) coextrudiert.

In einem dritten Schritt wird dann der Lack auf die Deckschicht Oberfläche aufgebracht und getrocknet.

Vor dem Auftrag der Lackschicht kann es notwendig sein, eine Vorbehandlung, beispielsweise eine Oberflächenaktivierung durch eine Kaltplasma-Corona Behandlung, zu verwenden, um die Oberfläche der Deckschicht zu aktivieren und eine gute Haftung des Lacks zu ermöglichen.

In einem vierten Schritt ist es dann, falls erwünscht, möglich, eine Strahlenvernetzung der zuvor erhaltenen veganen biobasierten Kunstlederfolie bzw. des Schichtmaterials durchzuführen. Die Strahlungsdosis und damit die entsprechende Vernetzungsdichte werden entsprechend der beabsichtigten Anwendung gewählt. Für eine Foliendicke von ca. 1 mm, und mit einer 1.05 MeV Spannung, kann vorteilhaft eine Strahlungsdosis von 25 bis 300 KGy, bevorzugt 50 bis 100 KGy gewählt werden.

Unter Verwendung des vorstehend beschriebenen Verfahrens sowie den nachfolgend beschriebenen Ausgangsmaterialien wurden die Material-Proben VKL068, VKL070, VKL074, VKL075 (siehe Tabelle 1), sowie VKL062, VKL063, VKL064, VKL065, VKL066, VKL067, und VKL069 (siehe Tabelle 2) für die geschäumte Schicht beziehungsweise die nicht geschäumte Deckschicht (VKL062, VKL063) des erfindungsgemäßen Schichtmaterials hergestellt.

**SLL318** ist ein biobasiertes LLDPE (Linear Low Density Polyethylene) von der Firma BRASKEM/Brasilien (in Europa von der Firma FKuR (Deutschland) vertreten). Der Bio Based Content ist mindestens 87%.

**Hydrocarb 95T-OG** ist natürliche Kreide von der Firma OMYA.

**DC 50-320** ist ein Silikon Additiv (50 % Silikon auf EVA Polymer als Träger) von der Firma Dow Corning.

**Keltan ECO 5470** ist ein biobasiertes EPDM von der Firma ARLANXEO/Niederlande. **Keltan 5508 ECO** ist ein biobasiertes EPDM von der Firma ARLANXEO/Niederlande

**Expancel 950MB80** sind Mikrosphären von der Firma AKZO NOBEL (Schweden), die sich mit der Wärme (ab eine gegebene Temperatur, von ca. 120 bis ca. 200°C je nach Typ) sehr stark expandieren können.

**Songnox 1010** ist ein phenolisches Antioxidans.

**Tabelle 1:**

| | VKL068 | VKL074 | VKL070 | VKL075 |
|---|---|---|---|---|
| SLL318 (LLDPE) | 33,50 | 33,50 | 25,00 | 25,00 |
| Hydrocarb 95T-OG (Kreide) | 29,50 | 28,00 | 29,50 | 27,50 |
| DC 50-320 (EVA Basis, Silikon Additiv) | 2,00 | 2,00 | 2,00 | 2,00 |
| Keltan ECO 5470 (EPDM) | 33,70 | | 42,20 | |
| Keltan 5508 ECO = Keltan ECO 5470 bepudert mit Kreide (EPDM) | | 35,20 | | 44,20 |
| Expancel 950 MB 80 (Mikrosphären) | 1,00 | 1,00 | 1,00 | 1,00 |
| Songnox 1010 (Antioxidans) | 0,30 | 0,30 | 0,30 | 0,30 |
| Summe | 100,00 | 100,00 | 100,00 | 100,00 |
| Farben Masterbatch (fakultativ) | 2% Schwarz MB | 2% Schwarz MB | 2% Schwarz MB | 2% Schwarz MB |
| Mechanik 1 mm Platte σ (Festigkeit) in MPa | 21,4¹⁾ | 20.3¹⁾ | 16,2¹⁾ | 20.5¹⁾ |
| | 18,3²⁾ | | 18,0²⁾ | |
| | 17,7³⁾ | | 16,1³⁾ | |
| Mechanik 1 mm Platte ε (Bruchdehnung) in % | >800¹⁾ | 942¹⁾ | >700¹⁾ | 917¹⁾ |
| | >600 ²⁾ | | >600²⁾ | |
| | 522³⁾ | | 515³⁾ | |
| Mechanik 1 mm Platte σ ₁₀ (Festigkeit bei 10% Dehnung) in MPa | 4,5¹⁾ | 4.0¹⁾ | 3,3¹⁾ | 2.8¹⁾ |
| | 4,4²⁾ | | 3,5²⁾ | |
| | 4,8³⁾ | | 3,2³⁾ | |
| Hot Set (200°C) | 50/10 ²⁾ | --- | 35/10 ²⁾ | --- |
| | 25/5 ³⁾ | | 15/5 ³⁾ | |
| BBC (Bio Based Content), berechnet | 74.80 % | 74.80 % | 72.75 % | 72.75 % |
| BBC (Bio Based Content), gemessen von der Firma BetaAnalytic nach ASTM D6866-16 Method B (AMS) | 74.80 % | 75.01 % | 72.75 % | 72.78 % |

| | | | | |
|---|---|---|---|---|
| ¹⁾ unvernetzt ²⁾ vernetzt mit 50 kGy ³⁾ vernetzt mit 100 kGy | | | | |

**Tabelle 2:**

| | VKL062* | VKL063* | VKL064 * | VKL065 * | VKL066 * | VKL067 * | VKL069 |
|---|---|---|---|---|---|---|---|
| SLL318 (LLDPE) | 38,00 | 37,00 | 37,00 | 37,00 | 36,70 | 36,70 | 30,00 |
| Hydrocarb 95T-OG | 29,70 | 29,70 | 29,70 | 29,70 | 29,50 | 29,50 | 29,50 |
| DC 50-320 (EVA Basis) | 2,00 | 3,00 | 2,00 | 2,00 | 2,00 | 2,00 | 2,00 |
| Keltan ECO 5470 | 30,00 | 30,00 | 30,00 | 30,00 | 29,50 | 29,50 | 37,20 |
| Expancel 950 MB 80 | | | 1,00 | | 2,00 | | 1,00 |
| Expancel 980 MB 120 | | | | 1,00 | | 2,00 | |
| Songnox 1010 | 0,30 | 0,30 | 0,30 | 0,30 | 0,30 | 0,30 | 0,30 |
| Summe | 100,00 | 100,00 | 100,00 | 100,00 | 100,00 | 100,00 | 100,00 |
| Farben Masterbat ch | 2% Schwarz MB | 2% Schwarz MB | 2% Schwarz MB | 2% Schwarz MB | 2% Schwarz MB | 2% Schwarz MB | 2% Schwarz MB |
| Mechanik 1 mm Platte σ (Festigkeit ) in MPa | 20,7¹⁾ | 21,4¹⁾ | 18,9¹⁾ | 19,2¹⁾ | 19,0¹⁾ | 18,2¹⁾ | |
| | 16,8⁴⁾ | 17,0⁴⁾ | | | 16,9³⁾ | 16,8³⁾ | 19,0¹⁾ 18,2²⁾ |
| | 14,7⁵⁾ | 16,5⁵⁾ | | | 16,7⁴⁾ | 16,1⁴⁾ | 16,5³⁾ |
| Mechanik 1 mm Platte ε (Bruchdeh nung) in % | 796¹⁾ | 832¹⁾ | 808¹⁾ | 793¹⁾ | 838¹⁾ | 796¹⁾ | 1101¹⁾ |
| | 553⁴⁾ | 441⁴⁾ | | | | | >600²⁾ |
| | 392⁵⁾ | 410⁵⁾ | | | | | 527³⁾ |
| | | | | | 527³⁾ | 525³⁾ | |
| | | | | | 471⁴⁾ | 453⁴⁾ | |
| Mechanik 1 mm Platte σ ₁₀ (Festigkeit bei 10% Dehnung) in MPa | | | 4,7¹⁾ | 4,7¹⁾ | 5,3¹⁾ | 5,1¹⁾ | 4,0¹⁾ |
| | | | | | | | 4,0²⁾ |
| | | | | | | | 4,0³⁾ |
| | | | | | 5,2³⁾ | 5,1³⁾ | |
| | | | | | 5,1⁴⁾ | 5,4⁴⁾ | |
| Hot Set (200°C) | 30/5 ²⁾ | 30/10 ²⁾ | | | 30/10 ²⁾ | 30/10 ²⁾ | 40/10 ²⁾ |
| | 15/5 ³⁾ | 15/5 ³⁾ | | | 30/5 ³⁾ | 25/5 ³⁾ | 20/5 ³⁾ |
| BBC (Bio Based Content) | 76.90% | 75.66% | 75.66% | 75.66% | 74.58% | 74.58% | 73.96% |

| | | | | | | | |
|---|---|---|---|---|---|---|---|
| ¹⁾ unvernetzt ²⁾ vernetzt mit 50 kGy ³⁾ vernetzt mit 100 kGy ⁴⁾ vernetzt mit 150 kGy ⁵⁾ vernetzt mit 200 kGy * nicht beansprucht | | | | | | | |

Die mechanischen Eigenschaften von VKL070 scheinen gegenüber PVC oder PUR Kunstledern besonders gut zu sein. Bruchdehnung > 500% und Festigkeit > 16 MPa, wenn mit 50 oder 100 KGy vernetzt wurde. Die Hot Set Werte sind wünschenswert tief. Das bedeutet, dass das Material nach Strahlenvernetzung sehr gut vernetzt ist, wobei der Bio Based Content (BBC) aus organischem Bestandteil bei über 72% liegt. Für ein Standard Kunstleder aus PVC oder PUR liegt der BBC nur bei 0%.

**Tabelle 3:**

| | LKL086 |
|---|---|
| SLL318 (LLDPE) | 7,50 |
| Hydrocarb 95T-OG (Kreide) | 27,70 |
| DC 50-320 (EVA Basis, Silikon Additiv) | 2,00 |
| Keltan ECO 5470 (EPDM) | |
| Keltan 5508 ECO = Keltan ECO 5470 bepudert mit Kreide (EPDM) | 62,50 |
| Expancel 950 MB 80 (Mikrosphären) | |
| Songnox 1010 (Antioxidans) | 0,30 |
| Summe | 100,00 |
| Farben Masterbatch (fakultativ) | 2% Schwarz MB |
| Mechanik 1 mm Platte σ (Festigkeit) in MPa | 16.1¹⁾ |
| Mechanik 1 mm Platte ε (Bruchdehnung) in % | 918¹⁾ |
| Mechanik 1 mm Platte σ ₁₀ (Festigkeit bei 10% Dehnung) in MPa | 1.2¹⁾ |
| Hot Set (200°C) | --- |
| BBC (Bio Based Content) | 67% |

| | |
|---|---|
| ¹⁾ unvernetzt | |

Die Verwendung von höheren Mengen an EPDM und geringeren Mengen an LLDPE führt zu signifikant verringerten σ 10-Werten. Dies ist besonders vorteilhaft für den Einsatz von Kunstleder, damit die Eigenschaften nicht zu steif bzw. papierartig werden, sondern eine Leder-ähnliche Flexibilität erhalten.

### Zitierte Druckschriften

- US 2013/0022771 A1
- US 2011/0183099 A1
- EP2342262 (B1)

## Patentansprüche

1. Schichtmaterial mit vier oder mehr Schichten mit der folgenden Reihenfolge:
- Textilträger-Schicht;
- geschäumte Schicht A;
- nicht-geschäumte Deckschicht; und
- Lackschicht; wobei
Schicht A aufweist:
- 0-35 Gewichtsprozent Polyethylen als erstes Polymer,
- 30-80 Gewichtsprozent Ethylen-Propylen-Dien-Monomer (EPDM) als zweites Polymer;
- 10-40 Gewichtsprozent Füllstoff,
wobei der organische Bestandteil der Schicht A einen biobasierten Kohlenstoffanteil (BBC) von mindestens 50%, bestimmt nach ASTM D6866-16 Method B (AMS), aufweist, und
wobei das Schichtmaterial eine Dicke von bis zu 4 cm aufweist.

2. Das Schichtmaterial nach Anspruch 1, wobei die geschäumte Schicht A unter Verwendung eines Treibmittels extrudiert oder kalandriert worden ist.

3. Das Schichtmaterial nach Anspruch 1, wobei die nicht-geschäumte Deckschicht eine geringere Dicke als Schicht A aufweist.

4. Das Schichtmaterial nach einem der Ansprüche 1 bis 3, wobei die Schicht A mit Elektronenstrahlen strahlenvernetzt ist.

5. Das Schichtmaterial nach einem der Ansprüche 1 bis 4, wobei die Schicht A einen Hot Set bei 200°C von weniger als 100%, bevorzugt weniger als 50% aufweist, gemessen nach DIN EN 60811-507.

6. Das Schichtmaterial nach einem der Ansprüche 2 bis 5, wobei als Treibmittel in der geschäumten Schicht A ein expandierbarer Leichtfüllstoff verwendet wird.

7. Das Schichtmaterial nach einem der Ansprüche 1 bis 6, in der Form eines Kunstleders.

8. Das Schichtmaterial nach einem der Ansprüche 1 bis 7, wobei die nicht-geschäumte Deckschicht aufweist:
- 1-20 Gewichtsprozent Polyethylen als erstes Polymer,
- 30-80 Gewichtsprozent Ethylen-Propylen-Dien-Monomer (EPDM) als zweites Polymer;
- 10-40 Gewichtsprozent Füllstoff,
- 0-3 Gewichtsprozent Silikon Additiv, und
- 0,5-3 Gewichtsprozent Antioxidant und/oder UV-Absorber
wobei der organische Bestandteil der Deckschicht einen biobasierten Kohlenstoffanteil (BBC) von mindestens 50%, bestimmt nach ASTM D6866-16 Method B (AMS), aufweist, und
wobei das Schichtmaterial eine Dicke von bis zu 4 cm aufweist; bevorzugt ist das Material von Schicht A und der Deckschicht identisch mit dem Unterschied, dass die Deckschicht nicht geschäumt ist und insbesondere keine Treibmittel aufweist.

9. Das Schichtmaterial nach einem der Ansprüche 2 bis 8, wobei die geschäumte Schicht aufweist:
- 1-15 Gewichtprozent Polyethylen,
- 50-80 Gewichtsprozent Ethylen-Propylen-Dien-Monomer (EPDM), als zweites Polymer,
- 10-40 Gewichtsprozent Füllstoff(e),
- 1-3 Gewichtsprozent expandierte Mikrohohlkugeln,
- 0-3 Gewichtsprozent Silikon Additiv, und
- 0,5-3 Gewichtsprozent Antioxidant und/oder UV-Absorber.

10. Das Schichtmaterial nach einem der Ansprüche 1 bis 9, wobei die Lackschicht Acrylharz, Polyurethan und/oder Polytetrafluorethylen (Teflon) enthält, oder daraus besteht.

11. Verfahren zur Herstellung des Schichtmaterials nach einem der Ansprüche 1 bis 10, aufweisend:
a) Bereitstellen der Textilträger-Schicht, der Zusammensetzung für die Schicht A, und der Zusammensetzung für die nicht-geschäumte Deckschicht,
b) Extrudieren oder Kalandrieren der Komponenten aus Schritt (a) zu einem Schichtmaterial, und
c) Aufbringen der Lackschicht auf das Schichtmaterial aus Schritt b).

12. Das Verfahren nach Anspruch 11, weiterhin aufweisend:
d) Strahlenvernetzen des Schichtmaterials mit Elektronenstrahlen, unter kontinuierlicher Durchführung des Schichtmaterials durch eine Vorrichtung zum Bestrahlen.

13. Schichtmaterial mit vier oder mehr Schichten, davon mindestens eine geschäumte Schicht A, die unter Verwendung eines Extrusionsverfahrens oder eines Kalandrierverfahrens hergestellt worden ist, wobei die folgende Zusammensetzung extrudiert oder kalandriert wird:
- 1-20 Gewichtsprozent Polyethylen als erstes Polymer,
- 30-80 Gewichtsprozent eines zweiten Polymers, ausgewählt aus der Gruppe bestehend aus Ethylen-Propylen-Dien-Monomer (EPDM), Ethylen-Vinyl-Acetat Copolymer (EVA), Polyethylen-Octen (POE), Ethylen-Butyl-Acrylat-Copolymer (EBA), und Ethylen-Methacrylat Copolymer;
- 10-40 Gewichtsprozent Füllstoff,
wobei der organische Bestandteil der geschäumten Schicht einen biobasierten Kohlenstoffanteil (BBC) von mindestens 50%, bestimmt nach ASTM D6866-16 Method B (AMS), aufweist, und wobei das Schichtmaterial eine Dicke von bis zu 4 cm aufweist.

## Claims

1. Layered material with four or more layers with the following order:
- textile support layer;
- foamed layer A;
- non-foamed top layer; and
- varnish layer; wherein
layer A comprises:
- 0-35 weight percent polyethylene as the first polymer,
- 30-80 weight percent ethylene propylene diene monomer (EPDM) as the second polymer;
- 10-40 weight percent filler,
wherein the organic component of layer A has a bio-based carbon content (BBC) of at least 50% as determined by ASTM D6866-16 Method B (AMS); and wherein
the layered material has a thickness of up to 4 cm.

2. The layered material according to claim 1, wherein the foamed layer A has been extruded or calendered using a blowing agent.

3. The layered material according to claim 1, wherein the non-foamed top layer has a thickness less than layer A.

4. The layered material according to any one of claims 1 to 3, wherein the layer A is radiation crosslinked with electron beams.

5. The layered material according to any one of claims 1 to 4, wherein layer A has a hot set at 200°C of less than 100%, preferably less than 50%, measured according to DIN EN 60811-507.

6. The layered material according to any one of claims 2 to 5, wherein an expandable lightweight filler is used as blowing agent in the foamed layer A.

7. The layered material according to any one of claims 1 to 6, in the form of an artificial leather.

8. The layered material according to any one of claims 1 to 7, wherein the non-foamed top layer comprises:
- 1-20 weight percent polyethylene as the first polymer,
- 30-80 weight percent ethylene propylene diene monomer (EPDM) as the second polymer;
- 10-40 weight percent filler,
- 0-3 weight percent silicone additive, and
- 0.5-3 weight percent antioxidant and/or UV absorber
wherein the organic component of the top layer has a bio-based carbon (BBC) content of at least 50%, as determined by ASTM D6866-16 Method B (AMS); and wherein
the layered material has a thickness of up to 4 cm; preferably, the material of layer A and the top layer is identical, with the difference that the top layer is not foamed and, in particular, has no blowing agents.

9. The layered material according to any one of claims 2 to 8, wherein the foamed layer comprises:
- 1-15 weight percent of polyethylene,
- 50-80 weight percent ethylene propylene diene monomer (EPDM), as the second polymer,
- 10-40 weight percent filler(s),
- 1-3 weight percent expanded hollow microspheres,
- 0-3 weight percent silicone additive, and
- 0.5-3 weight percent antioxidant and/or UV absorber.

10. The layered material according to any one of claims 1 to 9, wherein the varnish layer comprises or consists of acrylic resin, polyurethane and/or polytetrafluoroethylene (Teflon).

11. Method for producing the layered material according to any one of claims 1 to 10, comprising:
a) providing the textile support layer, the composition for layer A, and the composition for the non-foamed top layer,
b) extruding or calendering the components of step (a) into a layered material, and
c) applying the varnish layer to the layered material from step b).

12. The method of claim 11, further comprising:
d) radiation crosslinking of the layered material with electron beams, with continuous passage of the layered material through a device for irradiation.

13. Layered material having four or more layers, at least one of which is a foamed layer A, which has been prepared using an extrusion process or a calendering process, wherein the following composition is extruded or calendered:
- 1-20 weight percent of polyethylene as the first polymer,
- 30-80 weight percent of a second polymer selected from the group consisting of ethylene propylene diene monomer (EPDM), ethylene vinyl acetate copolymer (EVA), polyethylene octene (POE), ethylene butyl acrylate copolymer (EBA), and ethylene methacrylate copolymer;
- 10-40 weight percent filler,
wherein the organic component of the foamed layer has a bio-based carbon (BBC) content of at least 50%, as determined by ASTM D6866-16 Method B (AMS), and wherein the layered material has a thickness of up to 4 cm.

## Revendications

1. Matériau stratifié comprenant quatre couches ou plus, dans l'ordre suivant :
- couche de support textile ;
- couche expansée A ;
- couche supérieure non expansée ; et
- couche de vernis ; dans lequel
la couche A comprend :
- 0 à 35 pour cent en poids de polyéthylène comme premier polymère,
- 30 à 80 pour cent en poids de monomère éthylène-propylène-diène (EPDM) comme deuxième polymère ;
- 10 à 40 pour cent en poids de charge,
dans lequel le composant organique de la couche A a une teneur en carbone biosourcé (BBC) d'au moins 50 %, déterminée selon ASTM D6866-16 Méthode B (AMS), et
dans lequel le matériau stratifié a une épaisseur allant jusqu'à 4 cm.

2. Matériau stratifié selon la revendication 1, dans lequel la couche expansée A a été extrudée ou calandrée en utilisant un agent gonflant.

3. Matériau stratifié selon la revendication 1, dans lequel la couche supérieure non expansée a une épaisseur inférieure à celle de la couche A.

4. Matériau stratifié selon l'une des revendications 1 à 3, dans lequel la couche A est réticulée par rayonnement avec des faisceaux d'électrons.

5. Matériau stratifié selon l'une des revendications 1 à 4, dans lequel la couche A comprend un fluage à chaud à 200 °C inférieur à 100 %, de préférence inférieur à 50 %, mesuré selon DIN EN 60811-507.

6. Matériau stratifié selon l'une des revendications 2 à 5, dans lequel on utilise une charge légère expansible comme agent gonflant dans la couche expansée A.

7. Matériau stratifié selon l'une des revendications 1 à 6, sous la forme d'un cuir synthétique.

8. Matériau stratifié selon l'une des revendications 1 à 7, dans lequel la couche supérieure non expansée comprend :
- 1 à 20 pour cent en poids de polyéthylène comme premier polymère,
- 30 à 80 pour cent en poids de monomère éthylène-propylène-diène (EPDM) comme deuxième polymère ;
- 10 à 40 pour cent en poids de charge,
- 0 à 3 pour cent en poids d'additif silicone, et
- 0,5 à 3 pour cent en poids d'antioxydant et/ou d'absorbeur d'UV
dans lequel le composant organique de la couche supérieure a une teneur en carbone biosourcé (BBC) d'au moins 50 %, déterminée selon ASTM D6866-16 Méthode B (AMS), et
dans lequel le matériau stratifié a une épaisseur allant jusqu'à 4 cm ; de préférence, le matériau de la couche A et de la couche supérieure est identique, à la différence que la couche supérieure n'est pas expansée et, en particulier, ne comprend pas d'agent gonflant.

9. Matériau stratifié selon l'une des revendications 2 à 8, dans lequel la couche expansée comprend :
- 1 à 15 pour cent en poids de polyéthylène,
- 50 à 80 pour cent en poids de monomère éthylène-propylène-diène (EPDM), comme deuxième polymère,
- 10 à 40 pour cent en poids de charge(s),
- 1 à 3 pour cent en poids de microsphères creuses expansées,
- 0 à 3 pour cent en poids d'additif silicone, et
- 0,5 à 3 pour cent en poids d'antioxydant et/ou d'absorbeur d'UV.

10. Matériau stratifié selon l'une des revendications 1 à 9, dans lequel la couche de vernis contient ou est constituée de résine acrylique, de polyuréthane et/ou de polytétrafluoroéthylène (téflon).

11. Procédé de fabrication du matériau stratifié selon l'une des revendications 1 à 10, comprenant les étapes consistant à :
a) fournir la couche de support textile, la composition pour la couche A et la composition pour la couche supérieure non expansée,
b) extruder ou calandrer les composants de l'étape (a) en un matériau stratifié, et
c) appliquer la couche de vernis sur le matériau stratifié de l'étape b).

12. Procédé selon la revendication 11, comprenant en outre l'étape consistant à :
d) réticuler par rayonnement le matériau stratifié avec des faisceaux d'électrons, en faisant passer en continu le matériau stratifié à travers un dispositif d'irradiation.

13. Matériau stratifié comprenant quatre couches ou plus, dont au moins une couche expansée A, qui a été produite en utilisant un procédé d'extrusion ou un procédé de calandrage, dans lequel la composition suivante est extrudée ou calandrée :
- 1 à 20 pour cent en poids de polyéthylène comme premier polymère,
- 30 à 80 pour cent en poids d'un deuxième polymère choisi dans le groupe constitué par le monomère éthylène-propylène-diène (EPDM), le copolymère éthylène-acétate de vinyle (EVA), le polyéthylène-octène (POE), le copolymère éthylène-butyl-acrylate (EBA), et le copolymère éthylène-méthacrylate ;
- 10 à 40 % en poids de charge,
dans lequel le composant organique de la couche expansée a une teneur en carbone biosourcé (BBC) d'au moins 50 %, déterminée selon ASTM D6866-16 Méthode B (AMS), et dans lequel le matériau stratifié a une épaisseur allant jusqu'à 4 cm.
